# EUROPÄISCHE PATENTSCHRIFT

(11) **EP 2 285 635 B1**
(45) Veröffentlichungstag und Bekanntmachung des Hinweises auf die Patenterteilung: **25.03.2015**
(21) Anmeldenummer: 09757249.9
(22) Anmeldetag: 29.05.2009
(51) Int. Cl.: B60T 15/48, B60T 15/56, B60T 17/02, F04B 49/03

(54) **KOMPRESSORSYSTEM UND VERFAHREN ZUM BETREIBEN EINES KOMPRESSORSYSTEMS**
COMPRESSOR SYSTEM, AND METHOD FOR THE OPERATION OF A COMPRESSOR SYSTEM
SYSTÈME DE COMPRESSEUR ET PROCÉDÉ PERMETTANT DE FAIRE FONCTIONNER UN SYSTÈME DE COMPRESSEUR

(30) Priorität: 30.05.2008 DE 102008026028
(43) Veröffentlichungstag der Anmeldung: 23.02.2011
(73) Patentinhaber: KNORR-BREMSE Systeme für Nutzfahrzeuge GmbH, 80809 München (DE)
(72) Erfinder: MELLAR, Jörg, 85652 Pliening (DE)
(74) Vertreter: Schönmann, Kurt
(86) Internationale Anmeldenummer: PCT/EP2009/003888
(87) Internationale Veröffentlichungsnummer: WO 2009/146866

(56) Entgegenhaltungen:
- DE-A1-102006 023 632
- DE-A1-102007 037 087
- DE-A1-102007 051 940
- US-B1- 7 484 480

## Beschreibung

Die Erfindung betrifft ein Kompressorsystem mit einem Kompressor zur Druckluftversorgung eines Nutzfahrzeugs mit einem einen Turbolader aufweisenden Antriebsmotor, wobei von dem Turbolader vorverdichtete Luft über eine erste Luftzuführung von dem Kompressor ansaugbar ist.

Die Erfindung betrifft weiterhin ein Verfahren zum Steuern eines Kompressorsystems mit einem Kompressor zur Druckluftversorgung eines Nutzfahrzeugs mit einem einen Turbolader aufweisenden Antriebsmotor.

Moderne Nutzfahrzeuge verfügen in der Regel über druckluftbetriebene Teilsysteme, zum Beilspiel druckluftbetriebene Betriebsbremsen und eine Luftfederung. Um die druckluftbetriebenen Teilsysteme des Nutzfahrzeugs mit ausreichend Druckluft versorgen zu können, verfügt das Nutzfahrzeug weiterhin über einen Kompressor zur Erzeugung der Druckluft.

Heute werden turboaufgeladene einstufige und natürlich ansaugende einstufige Kompressoren verwendet. Die aufladbare Bauweise hat den Vorteil, dass sehr große Fördermengen zur Verfügung stehen. Sie weist jedoch einen hohen Schadraum auf, der dazu führt, dass bei niedrigen Ladedrücken unterhalb von etwa 0,2 bar die Fördermenge sehr klein ist. Bei diesen kleinen Ladedrücken kann die Fördermenge sogar geringer sein als bei einem vergleichbaren natürlich ansaugenden Kompressor. Weiterhin haben aufgeladene Kompressoren in der Leerlaufphase den Nachteil, dass sie weiterhin sehr große Luftmengen fördern, was zu einer entsprechend hohen Leistungsaufnahme führt.

Es ist bereits bekannt, den für einen aufgeladenen Kompressor bereitgestellten Ladedruck auf einen konstanten Wert zu beschränken. Diese zum Beispiel mit Membranventilen ausgeführten Lösungen sind prinzipbedingt mechanisch wenig robust, da in der stark pulsierenden Luftströmung des Luftansaugweges mechanische Steuer- und Regelelemente platziert werden müssen. Zudem verursachen derartige Ventile selbst eine Drosselwirkung, die sich insbesondere im Fall der niedrigen Ladedrücke negativ auf die geförderte Luftmenge auswirkt.

Um die in der Leerlaufphase auftretenden hohen Leistungsverluste eines aufgeladenen Kompressors zu reduzieren, ist bekannt, ein so genanntes Turbo-Cut-Off-Ventil (TCO-Ventil) in der Förderleitung stromabwärts des Kompressors anzuordnen. Dieses Turbo-Cut-Off-Ventil kann in der Leerlaufphase des aufgeladenen Kompressors das geförderte Luftvolumen auf Null reduzieren, ist jedoch sehr empfindlich gegenüber auftretenden Verschmutzungen.

Die DE 10 2006 023632 A1 offenbart eine Druckluftversorgungseinrichtung für ein Nutzfahrzeug.

Der Erfindung liegt die Aufgabe zugrunde, ein Kompressorsystem bereitzustellen, dass insbesondere bei niedrigen Ladedrücken ein größeres Luftvolumen fördert.

Diese Aufgabe wird mit den Merkmalen der unabhängigen Ansprüche gelöst.

Vorteilhafte Ausführungsformen und Ausgestaltungen ergeben sich aus den abhängigen Ansprüchen.

Das gattungsgemäße Kompressorsystem wird dadurch weiterentwickelt, dass nicht vorverdichtete Umgebungsluft über eine zweite Luftzuführung von dem Kompressor ansaugbar ist. Durch das Vorsehen einer zweiten Luftzuführung, über die nicht vorverdichtete Umgebungsluft von dem Kompressor ansaugbar ist, kann ein Kompressor in dem Kompressorsystem verwendet werden, der für das Ansaugen nicht vorverdichteter Umgebungsluft optimiert ist. Dies führt auch bei niedrigen Ladedrücken zu einer deutlichen Steigerung der geförderten Luftmenge.

Erfindungsgemäß ist eine Ladeluft-Ventileinrichtung in der ersten Luftzuführung angeordnet.

Durch die Ladeluft-Ventileinrichtung in der ersten Luftzuführung kann der Kompressor vor zu hohen Ladedrücken geschützt werden. Überschreitet der von dem Turbolader bereitgestellte Ladedruck eine einstellbare Ladedruckschwelle, so kann die Ladeluft-Ventileinrichtung die erste Luftzuführung sperren.

Erfindungsgemäß ist weiterhin, dass eine Umgebungsluft-Ventileinrichtung in der zweiten Luftzuführung angeordnet ist. Durch die Anordnung der Umgebungsluft-Ventileinrichtung in der zweiten Luftzuführung ist dem Kompressor nicht vorverdichtete Umgebungsluft zuführbar, wenn der von dem Turbolader bereitgestellte Ladedruck die einstellbare Ladedruckschwelle überschreitet. Insbesondere kann die Umgebungsluft-Ventileinrichtung die zweite Luftzuführung verschließen, solange der von dem Turbolader bereitgestellte Ladedruck die Ladedruckschwelle nicht überschreitet.

Erfindungsgemäß ist vorgesehen, dass ein Drucksensor in der ersten Luftzuführung angeordnet ist, um den von dem Turbolader bereitgestellten Ladedruck zu bestimmen. Durch die Anordnung eines Drucksensors in der ersten Luftzuführung ist der von dem Turbolader bereitgestellte Ladedruck direkt bestimmbar. Das von dem Drucksensor erzeugte Signal ist daher geeignet, als Grundlage zur direkten oder indirekten Steuerung der Ladeluft-Ventileinrichtung beziehungsweise der Umgebungsluft-Ventileinrichtung zu dienen.

Es ist denkbar, dass der Kompressor einen über eine Ventileinrichtung zuschaltbaren Schadraum umfasst. Durch das Vorsehen eines zuschaltbaren Schadraums können Druckspitzen, die insbesondere bei hohen Ladedrücken auftreten, reduziert werden. Auf diese Weise kann insbesondere die einstellbare Ladedruckschwelle höher gewählt werden, ohne dass der Kompressor von zu hohen Drücken überbelastet wird.

Vorteilhafterweise ist vorgesehen, dass das Kompressorsystem ein elektronisches Steuergerät zum Steuern von Funktionen des Kompressorsystems umfasst. Ein elektronisches Steuergerät kann in einfacher Weise verschiedene elektrisch betätigbare Funktionen, insbesondere elektrisch betätigbare oder vorsteuerbare Ventileinrichtungen, schalten.

Dabei kann vorgesehen sein, dass das elektronische Steuergerät einen Anschluss an einen CAN-Bus umfasst und dass das elektronische Steuergerät über den CAN-Bus den Wert des von dem Turbolader bereitgestellten aktuellen Ladedrucks oder Rohdaten zur Berechnung des aktuellen Ladedrucks erhält. Durch den Anschluss an den CAN-Bus des Fahrzeugs kann das elektronische Steuergerät den von dem Turbolader bereitgestellten Ladedruck unabhängig von eigenen Sensoren ermitteln beziehungsweise bestimmen.

Das gattungsgemäße Verfahren wird dadurch weiterentwickelt, dass unterhalb einer einstellbaren Ladedruckschwelle von dem Turbolader bereitgestellte vorverdichtete Luft über eine erste Luftzuführung von dem Kompressor angesaugt wird und dass oberhalb der einstellbaren Ladedruckschwelle nicht vorverdichtete Umgebungsluft über eine zweite Luftzuführung von dem Kompressor angesaugt wird. Auf diese Weise werden die Vorteile und Besonderheiten des erfindungsgemäßen Kompressorsystems auch im Rahmen eines Verfahrens zum Betreiben eines Kompressorsystems umgesetzt.

Dies gilt auch für die nachfolgend angegebenen besonders bevorzugten Ausführungsformen des erfindungsgemäßen Verfahrens.

Dieses wird in nützlicher Weise dadurch weiterentwickelt, dass unterhalb der einstellbaren Ladedruckschwelle eine Umgebungsluft-Ventileinrichtung die zweite Luftzuführung verschließt.

Nützlicherweise ist dabei vorgesehen, dass oberhalb der einstellbaren Ladedruckschwelle eine Ladeluft-Ventileinrichtung die erste Luftzuführung verschließt.

Denkbar ist auch, dass oberhalb einer einstellbaren Schadraum-Ladedruckschwelle eine Ventileinrichtung einen Schadraum zuschaltet.

Insbesondere kann vorgesehen sein, dass der Ladedruck über einen Drucksensor ermittelt wird.

Es kann aber auch vorgesehen sein, dass der Ladedruck aus CAN-Busdaten ermittelt wird und/oder über einen CAN-Bus gesendet wird.

Zusätzlich kann vorgesehen sein, dass die erste Luftzuführung von der Ladeluft-Ventileinrichtung und die zweite Luftzuführung von der Umgebungsluft-Ventileinrichtung verschlossen werden, um den Kompressor in einen energiesparenden Betriebszustand zu versetzen. Durch das gleichzeitige Absperren der ersten Luftzuführung und der zweiten Luftzuführung wird das von dem Kompressor geförderte Luftvolumen auf Null reduziert.

In diesem Zusammenhang kann vorgesehen sein, dass die Ladeluft-Ventileinrichtung und/oder die Umgebungsluft-Ventileinrichtung einen Ansaugunterdruck des Kompressors durch eine Restundichtigkeit begrenzen. Durch eine geringe Restundichtigkeit, die den von dem Kompressor erzeugten Ansaugunterdruck beschränkt, ist ein Ölauswurf des Kompressors durch Ölsaugen reduzierbar.

Die Erfindung wird nun mit Bezug auf die begleitenden Zeichnungen anhand einer besonders bevorzugten Ausführungsform beispielhaft erläutert.

Es zeigen:
- Figur 1: ein schematisch dargestelltes Nutzfahrzeug mit einem Antriebsmotor und einem erfindungsgemäßen Kompressorsystem und
- Figur 2: das geförderte Luftvolumen unterschiedlich betriebener Kompressoren in Abhängigkeit von der Antriebsmotordrehzahl.

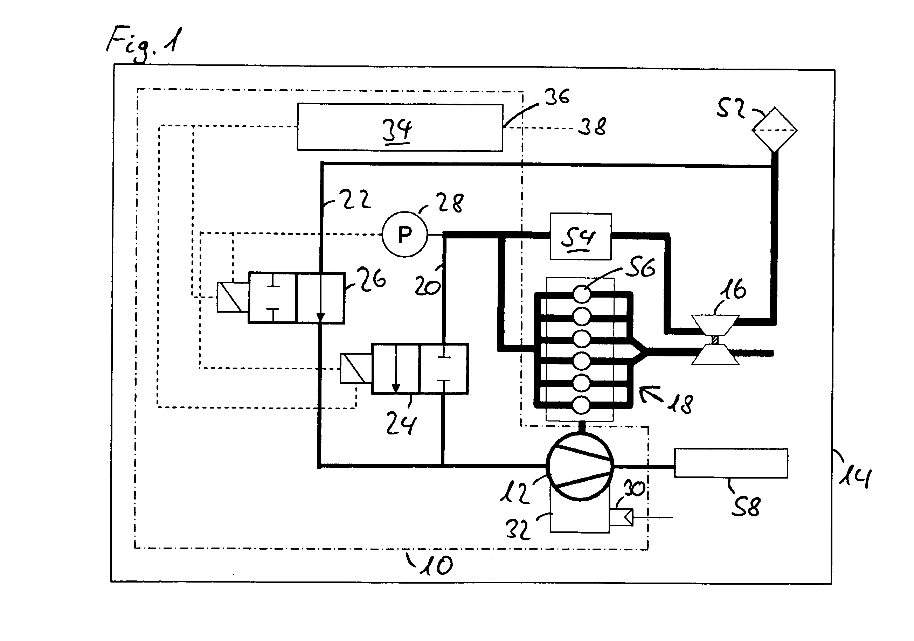

Figur 1 zeigt ein schematisch dargestelltes Nutzfahrzeug mit einem Antriebsmotor und einem erfindungsgemäßen Kompressorsystem. Das dargestellte Nutzfahrzeug 14 umfasst neben dem Antriebsmotor 18 und dem Kompressorsystem 10 eine Druckluftaufbereitungsanlage mit Verbrauchern 58, einen Luftfilter 52, einen Ladeluftkühler 54 und einen Turbolader 16. Das Kompressorsystem 10 selbst umfasst neben einem Kompressor 12, der ein Einzylinder- oder ein Doppelzylinderkompressor sein kann, ein elektronisches Steuergerät 34 mit einem Anschluss 36 an einen CAN-Bus 38, eine erste Luftzuführung 20 mit einer darin angeordneten Ladeluft-Ventileinrichtung 24 und eine zweite Luftzuführung 22 mit einer darin angeordneten Umgebungsluft-Ventileinrichtung 26. Weiterhin ist ein Drucksensor 28 in der ersten Luftzuführung 20 angeordnet, der den von dem Turbolader 16 bereitgestellten Ladedruck stromaufwärts der Ladeluft-Ventileinrichtung 24 bestimmt.

In Abhängigkeit von den Schaltzuständen der Ladeluft-Ventileinrichtung 24 und der Umgebungsluft-Ventileinrichtung 26 saugt der Kompressor 12 bereits von dem Turbolader 16 vorverdichtete Luft über die erste Luftzuführung 20 oder nicht vorverdichtete Umgebungsluft über die zweite Luftzuführung 22 an. Zumindest eine der beiden Luftzuführungen 20, 22 ist dabei immer vollständig geschlossen. Befinden sich die Ladeluft-Ventileinrichtung 24 und die Umgebungsluft-Ventilrichtung 26 in ihren dargestellten Schaltpositionen, so saugt der Kompressor 12 Umgebungsluft über den Luftfilter 52 und die zweite Luftzuführung 22 an. Werden sowohl die Ladeluft-Ventileinrichtung 24 als auch die Umgebungsluft-Ventileinrichtung 26 in ihre nicht dargestellten Schaltzustände überführt, so saugt der Kompressor 12 über den Luftfilter 52, den Turbolader 16, den Ladeluftkühler 54 und die erste Luftzuführung 20 bereits von dem Turbolader 16 vorverdichtete Luft an. Aufgrund des gegenüber dem Umgebungsdruck erhöhten Ladedruck steigt dabei bei gleicher Umdrehungszahl des Kompressors 12 das von dem Kompressor 12 geförderte Luftvolumen pro Zeiteinheit an. Der Turbolader 16 wird von den Abgasen des Antriebsmotors 18 angetrieben, wobei die Hauptaufgabe des Turboladers 16 in einer Aufladung des Antriebsmotors 18 zu sehen ist, das heißt, dass sechs dargestellte Zylinder 56 des Antriebsmotors mit einer größeren Menge Verbrennungsluft betrieben werden. Der Antrieb des Kompressors 12 erfolgt in einer dem Fachmann bekannten Weise durch den Antriebsmotor 18. Beispielsweise kann der Kompressor 12 über einen Rädertrieb von dem Antriebsmotor 18 angetrieben werden. Die von dem Kompressor 12 geförderte Druckluft wird der Druckluftaufbereitungsanlage mit Verbrauchern 58 zugeführt. Die Druckluftaufbereitungsanlage mit Verbrauchern 58 umfasst insbesondere eine dem Fachmann bekannte Druckluftaufbereitungsanlage sowie mehrere beispielsweise durch ein Mehrkreisschutzventil gegeneinander abgesicherte Verbraucherkreise an die die einzelnen Verbraucher angeschlossen sind. Der Kompressor 12 verfügt weiterhin über einen von einer Ventileinrichtung 30 zuschaltbaren Schadraum 32, von etwa 10 ccm pro Zylinder, um Druckspitzen während der Druckluftförderung abzumildern. Als Schadraum 32 wird allgemein jedes mit einem Kolbenraum des Kompressors in Verbindung stehende Raumvolumen bezeichnet, welches am Ende eines Verdichtungstakts des Kompressors übrig bleibt. Das Zuschalten eines Schadraumes 32 senkt daher die mögliche maximale Verdichtung des Kompressors ab und senkt somit die während eines Verdichtungstakts auftretenden Druckspitzen. Wenn nur die Umgebungsluft-Ventileinrichtung 26 in ihren nicht dargestellten Schaltzustand überführt wird und die Ladeluft-Ventileinrichtung 24 in ihrem dargestellten Schaltzustand verbleibt, so sind sowohl die erste Luftzuführung 20 als auch die zweite Luftzuführung 22 gesperrt. Der Kompressor 12 kann in diesem Schaltzustand des Kompressorsystems 10 keine Luft ansaugen und folglich auch keine Druckluft mehr fördern. Es ist bekannt, dass in diesem Zustand Öl, welches üblicherweise zur Schmierung des Kompressors 12 eingesetzt wird, durch den entstehenden Unterdruck während eines Expansionstakts des Kompressors 10 in den Verdichtungsraum gesaugt wird und bei dem nächsten Verdichtungstakt des Kompressors 12 in Richtung der angeschlossen Druckluftaufbereitungsanlage mit Verbrauchern 58 ausgeworfen wird. Um dies zu verhindern, ist es denkbar, dass die Ladeluft-Ventileinrichtung 24 und/oder die Umgebungsluft-Ventileinrichtung 26 nicht vollständig abdichten, sondern eine definierte Restundichtigkeit aufweisen, um den Ansaugunterdruck des Kompressors 12 zu begrenzen. Auf diese Weise wird der Ölauswurf des Kompressors 12 verringert. Das gleichzeitige Absperren der ersten Luftzuführung 20 und der zweiten Luftzuführung 22 durch die Ventileinrichtungen 24, 26 ist eine einfache Möglichkeit den Kompressor 12 in eine energiesparende Betriebsweise zu versetzen.

Solange der von dem Turbolader 16 bereitgestellte Ladedruck unterhalb der einstellbaren Ladedruckschwelle liegt, sind sowohl die Ladeluft-Ventileinrichtung 24 als auch die Umgebungsluft-Ventileinrichtung 26 in ihren nicht dargestellten Schaltzuständen. Der Kompressor 12 erhält dann bereits vorverdichtete Luft über die erste Luftzuführung 20. Der Kompressor 12 ist für das Ansaugen nicht vorverdichteter Luft optimiert, weshalb bereits geringe Ladedrücke das von ihm geförderte Luftvolumen deutlich erhöhen. Bis zu einem Ladedruck von zirka 0,6 bar kann der für das Ansaugen nicht vorverdichteter Luft optimierte Kompressor 12 problemlos auch bereits vorverdichtete Luft fördern. Übersteigt der von dem Turbolader 16 bereitgestellte Ladedruck diese erste Grenze, die auch als Schadraum-Ladedruckschwelle bezeichnet wird, so wird der dem Kompressor 12 zugeordnete Schadraum 32 über die Ventileinrichtung 30 zugeschaltet, um die während der Förderung der bereits vorverdichteten Luft auftretende Förderdrücke zu senken. Steigt der von dem Turbolader 16 bereitgestellte Ladedruck weiter an und übersteigt schließlich eine weitere als Ladedruckschwelle bezeichnete Grenze, so können die auftretenden Förderdrücke den Kompressor 12 trotz des Schadraums 32 beschädigen. Bei Überschreiten der Ladedruckschwelle werden daher die Ladeluft-Ventileinrichtung 24 und die Umgebungsluft-Ventileinrichtung 26 in ihre dargestellten Schaltzustände überführt und der dem Kompressor 12 zugeordnete Schadraum 32 wieder durch Betätigen der Ventileinrichtung 30 geschlossen. Der zum Ansaugen nicht vorkomprimierter Luft optimierte Kompressor saugt nunmehr über die zweite Luftzuführung 22 nicht vorkomprimierte Luft an. Das Zuschalten des Schadraums 32 kann auch ansonsten zur Reduzierung des geförderten Luftvolumens beziehungsweise zur Energieeinsparung verwendet werden, wenn keine große Luftmenge benötigt wird.

Die Ladeluft-Ventileinrichtung 24 und die Umgebungsluft-Ventileinrichtung 26 sind elektrisch oder pneumatisch betätigbare Ventileinrichtungen, die insbesondere einen möglichst großen Strömungsquerschnitt der Luftzuführungen 20, 22 freigeben, wenn sie in ihrem geöffneten Zustand sind. Die beiden Ventileinrichtungen 24, 26 können beispielsweise als einfache und robuste Drosselklappenventile ausgelegt sein. Vorteilhafterweise sind dabei die Drosselklappen entweder ganz geschlossen oder parallel im Luftstrom ausgerichtet. Der schädliche Einfluss von Ansaugpulsationen kann sich so nicht auswirken. Die Verwendung von Freiflussventilen, Schrägsitzventilen, Kolbenschiebern und Kugelhähnen, die ebenfalls im Verhältnis zum Leitungsquerschnitt sehr große Strömungsquerschnitte freigeben können, ist ebenfalls möglich. Die Ventileinrichtungen 24, 26 können als separate 2/2-Wegeventile ausgelegt sein. Eine Ansteuerung kann in direkter Weise über den Drucksensor erfolgen, wobei zum Schalten der Ventileinrichtungen dann keine weiteren Daten von einem Motorsteuergerät benötigt werden. Erfolgt die Schaltung der Ventileinrichtungen 24, 26 in Abhängigkeit von der Motordrehzahl über das elektronische Steuergerät 34, so wird die Motordrehzahl vorzugsweise von einem Motorsteuergerät ausgelesen. In diesem Fall muss zusätzlich das Kennfeld des Motorturboladers bekannt sein. Weiterhin ist auch eine Anbindung an den CAN-Bus 38 zum Übertragen der Motordrehzahl erforderlich. Die Ladeluft-Ventileinrichtung 24 und die Umgebungsluft-Ventileinrichtung 26 können zu einer gemeinsamen Ventileinrichtung zusammengefasst werden. Diese gemeinsame Ventileinrichtung besitzt dann vier Anschlüsse und drei Schaltstellungen:
- eine geöffnete erste Luftzuführung 20 bei geschlossener zweiter Luftzuführung 22;
- eine geschlossene erste Luftzuführung 20 bei geöffneter zweiter Luftzuführung 22;
- eine geschlossene erste Luftzuführung 20 bei gleichzeitig geschlossener Luftzuführung 22.

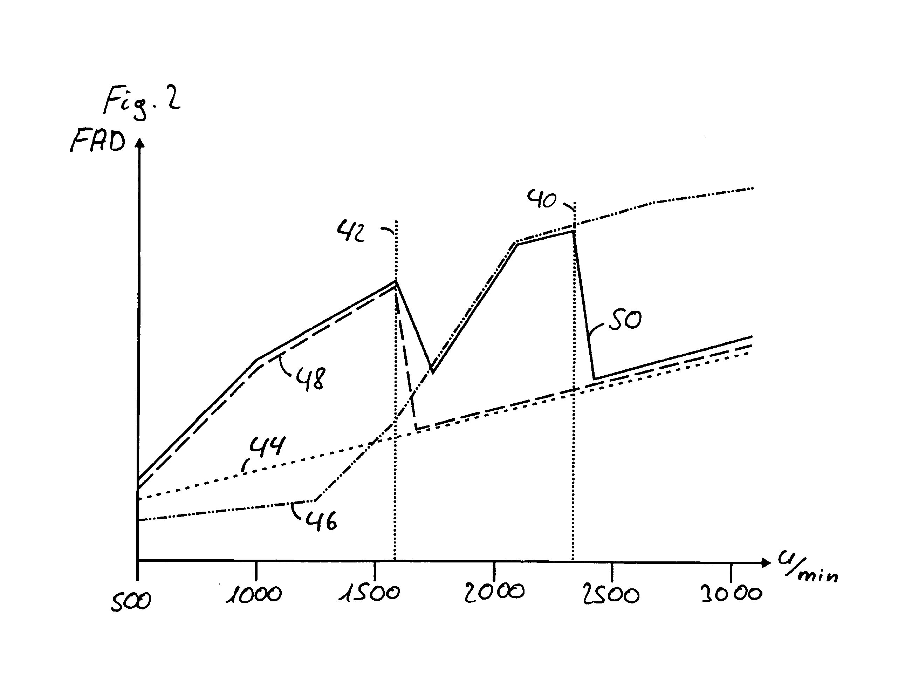

Figur 2 zeigt das geförderte Luftvolumen unterschiedlich betriebener Kompressoren in Abhängigkeit von der Motordrehzahl. Das geförderte Luftvolumen ("Free Air Delivery") ist auf der Y-Achse aufgetragen, während auf der X-Achse die Motordrehzahl des Antriebsmotors des Nutzfahrzeugs in Umdrehungen pro Minute aufgetragen ist. Eine erste Kompressorkennlinie 44 stellt das von einem Kompressor geförderte Luftvolumen in Abhängigkeit der Motordrehzahl dar, wobei der Kompressor selbst für das Ansaugen nicht vorkomprimierter Luft optimiert ist und keinerlei Optimierungen des geförderten Luftvolumens vorgenommen sind. Die erste Kennlinie 44 ist im dargestellten Motordrehzahlbereich näherungsweise linear. Eine zweite Kompressorkennlinie 46 stellt ebenfalls das von einem Kompressor in Abhängigkeit von der Motordrehzahl geförderte Luftvolumen dar, wobei der der zweiten Kompressorkennlinie 46 zugeordnete Kompressor für das Ansaugen bereits vorverdichteter Luft optimiert ist, das heißt zusammen mit einem Turbolader betrieben wird. Einer dritten Kompressorkennlinie 48 ist wieder ein für das Ansaugen nicht vorkomprimierter Luft optimierter Kompressor zugeordnet. Im Gegensatz zu dem der ersten Kompressorkennlinie 44 zugeordneten Kompressor wird dem Kompressor bei der Erzeugung der dritten Kompressorkennlinie 48 bis zu einer Schadraum-Ladedruckschwelle 42 bereits vorverdichtete Luft von einem Turbolader zugeführt. Bis zu der Schadraum-Ladedruckschwelle 42 ist das von dem Kompressor bereitgestellte Fördervolumen gemäß der dritten Kompressorkennlinie 48 deutlich gegenüber der ersten Kennlinie 44 erhöht. Bei Überschreiten der Schadraum-Ladedruckschwelle 42 wird die Zuführung bereits vorverdichteter Luft eingestellt, um eine Beschädigung des Kompressors zu vermeiden. Die Schadraum-Ladedruckschwelle 42 liegt bei ca. 0,6 bar. Je nachdem wie robust der Kompressor gebaut ist, kann auch eine Verschiebung möglich oder notwendig sein. Die dritte Kompressorkennlinie 48 fällt nach dem Umschalten der Luftzuführung bis auf das Niveau der ersten Kompressorkennlinie 44 ab, da nunmehr nur noch nicht vorverdichtete Umgebungsluft von dem Kompressor angesaugt wird. Bei Überschreiten der Schadraum-Ladedruckschwelle 42 werden daher zur Erzeugung der dritten Kompressorkennlinie 48 die aus der Figur 1 bereits bekannten Ladeluft-Ventileinrichtung und Umgebungsluft-Ventileinrichtung betätigt. In ähnlicher Weise wird eine vierte Kompressorkennlinie 50 erzeugt. Im Gegensatz zu der dritten Kompressorkennlinie 48 wird nunmehr allerdings bei Überschreiten der Schadraum-Ladedruckschwelle 42 der dem Kompressor zugeordnete Schadraum zugeschaltet, um die auftretenden Förderdrücke abzusenken. Der Kompressor wird jedoch weiterhin mit bereits vorverdichteter Luft von dem Turbolader beaufschlagt. Mit wachsender Motordrehzahl steigt daher das von dem Kompressor geförderte Luftvolumen wie bei einem turboaufgeladenen Kompressor wieder stark an und liegt insbesondere oberhalb der ersten Kompressorkennlinie 44. Bei Überschreiten einer Ladedruckschwelle 40, die bei ca. 1,5 bar liegt, sind die in dem Kompressor auftretenden Förderdrücke erneut so groß, dass sie geeignet wären, den Kompressor zu beschädigen. Um dies zu verhindern, werden die Ladeluft-Ventileinrichtung und die Umgebungsluft-Ventileinrichtung betätigt, so dass der Kompressor nunmehr nur noch nicht vorverdichtete Umgebungsluft ansaugen kann. Gleichzeitig kann der zuvor zugeschaltete Schadraum wieder geschlossen werden, so dass das von dem Kompressor geförderte Luftvolumen wieder auf das Niveau der ersten Kompressorkennlinie 44 absinkt. Wie aus Figur 2 ersichtlich ist, liegt die erfindungsgemäße Kompressorkennlinie 50 insbesondere bei geringen Motordrehzahlen oberhalb der Kennlinie 44, 46 für einen Umgebungsluft ansaugenden Kompressor bzw. einen turbogeladenen Kompressor.

### Bezugszeichenliste

- 10: Kompressorsystem
- 12: Kompressor
- 14: Nutzfahrzeug
- 16: Turbolader
- 18: Antriebsmotor
- 20: erste Luftzuführung
- 22: zweite Luftzuführung
- 24: Ladeluft-Ventileinrichtung
- 26: Umgebungsluft-Ventileinrichtung
- 28: Drucksensor
- 30: Ventileinrichtung
- 32: Schadraum
- 34: elektronisches Steuergerät
- 36: Anschluss
- 38: CAN-Bus
- 40: Ladedruckschwelle
- 42: Schadraum-Ladedruckschwelle
- 44: erste Kompressorkennlinie
- 46: zweite Kompressorkennlinie
- 48: dritte Kompressorkennlinie
- 50: vierte Kompressorkennlinie
- 52: Luftfilter
- 54: Ladeluftkühler
- 56: Zylinder
- 58: Druckluftaufbereitungsanlage mit Verbrauchern

## Patentansprüche

1. Kompressorsystem (10) mit einem Kompressor (12) zur Druckluftversorgung eines Nutzfahrzeugs (14) mit einem einen Turbolader (16) aufweisenden Antriebsmotor (18), wobei von dem Turbolader (16) vorverdichtete Luft über eine erste Luftzuführung (20) von dem Kompressor (12) ansaugbar ist, **dadurch gekennzeichnet**,
- dass nicht vorverdichtete Umgebungsluft über eine zweite Luftzuführung (22) von dem Kompressor (12) ansaugbar ist,
- dass eine Ladeluft-Ventileinrichtung (24) in der ersten Luftzuführung (20) angeordnet ist und eine Umgebungsluft-Ventileinrichtung (26) in der zweiten Luftzuführung (22) angeordnet ist,
- dass ein Drucksensor (28) in der ersten Luftzuführung (20) angeordnet ist, der einen vom Turbolader (16) bereitgestellten Ladedruck stromaufwärts der Ladeluft-Ventileinrichtung (24) bestimmt,
- dass die Ladeluft-Ventileinrichtung (24) dazu ausgelegt ist, das Ansaugen von durch den Turbolader (16) bereitgestellter vorverdichteter Luft über die erste Luftzuführung (20) durch den Kompressor (12) nur dann zu ermöglichen, wenn der vom Turbolader (16) bereitgestellte Ladedruck unterhalb einer einstellbaren Ladedruckschwelle (40) liegt, und
- dass die Umgebungsluft-Ventileinrichtung (26) dazu ausgelegt ist, das Ansaugen nicht vorverdichteter Umgebungsluft über die zweite Luftzuführung (22) durch den Kompressor (12) nur dann zu ermöglichen, wenn der vom Turbolader (16) bereitgestellte Ladedruck oberhalb einer einstellbaren Ladedruckschwelle (40) liegt.

2. Kompressorsystem (10) nach Anspruch 1, **dadurch gekennzeichnet, dass** der Kompressor (12) einen über eine Ventileinrichtung (30) zuschaltbaren Schadraum (32) umfasst.

3. Kompressorsystem (10) nach Anspruch 1 oder 2, **dadurch gekennzeichnet, dass** das Kompressorsystem (10) ein elektronisches Steuergerät (34) zum Steuern von Funktionen des Kompressorsystems (10) umfasst.

4. Kompressorsystem (10) nach Anspruch 3, **dadurch gekennzeichnet**,
- dass das elektronische Steuergerät (34) einen Anschluss (36) an einen CAN-Bus (38) umfasst und
- dass das elektronische Steuergerät (34) über den CAN-Bus (38) den Wert des von dem Turbolader (16) bereitgestellten aktuellen Ladedrucks oder Rohdaten zur Berechnung des aktuellen Ladedrucks erhält.

5. Verfahren zum Steuern eines Kompressorsystems (10) mit einem Kompressor (12) zur Druckluftversorgung eines Nutzfahrzeugs (14) mit einem einen Turbolader (16) aufweisenden Antriebsmotor (18), **dadurch gekennzeichnet**,
- dass von dem Turbolader (16) bereitgestellte vorverdichtete Luft über eine erste Luftzuführung (20), in der eine Ladeluft-Ventileinrichtung (24) und ein Drucksensor (28), der einen vom Turbolader (16) bereitgestellten Ladedruck stromaufwärts der Ladeluft-Ventileinrichtung (24) bestimmt, angeordnet sind, nur dann von dem Kompressor (12) angesaugt wird, wenn der vom Turbolader (16) bereitgestellte Ladedruck unterhalb einer einstellbaren Ladedruckschwelle (40) liegt und
- dass nicht vorverdichtete Umgebungsluft über eine zweite Luftzuführung (22), in der eine Umgebungsluft-Ventileinrichtung (26) angeordnet ist, nur dann von dem Kompressor (12) angesaugt wird, wenn der vom Turbolader (16) bereitgestellte Ladedruck oberhalb einer einstellbaren Ladedruckschwelle (40) liegt.

6. Verfahren nach Anspruch 5, **dadurch gekennzeichnet, dass** unterhalb der einstellbaren Ladedruckschwelle (40) die Umgebungsluft-Ventileinrichtung (26) die zweite Luftzuführung (22) verschließt.

7. Verfahren nach Anspruch 5 oder 6, **dadurch gekennzeichnet, dass** oberhalb der einstellbaren Ladedruckschwelle (40) die Ladeluft-Ventileinrichtung (24) die erste Luftzuführung (20) verschließt.

8. Verfahren nach einem der Ansprüche 5 bis 7, **dadurch gekennzeichnet, dass** oberhalb einer einstellbaren Schadraum-Ladedruckschwelle (42) eine Ventileinrichtung (30) einen Schadraum (32) zuschaltet.

9. Verfahren nach einem der Ansprüche 5 bis 8, **dadurch gekennzeichnet, dass** der Ladedruck aus CAN-Busdaten ermittelt wird und/oder über einen CAN-Bus (38) gesendet wird.

10. Verfahren nach einem der Ansprüche 5 bis 9, **dadurch gekennzeichnet, dass** die erste Luftzuführung (20) von der Ladeluft-Ventileinrichtung (24) und die zweite Luftzuführung (22) von der Umgebungsluft-Ventileinrichtung (26) verschlossen werden, um den Kompressor (12) in einen energiesparenden Betriebszustand zu versetzen.

11. Verfahren nach Anspruch 10, **dadurch gekennzeichnet, dass** die Ladeluft-Ventileinrichtung (24) und/oder die Umgebungsluft-Ventileinrichtung (26) einen Ansaugunterdruck des Kompressors (12) durch eine Restundichtigkeit begrenzen.

## Claims

1. Compressor system (10) with a compressor (12) for the supply of compressed air to a commercial vehicle (14) having an engine (18) possessing a turbocharger (16), air precompressed by the turbocharger (16) being capable of being sucked in by the compressor (12) via a first air feed (20), **characterized**
- in that non-precompressed ambient air can be sucked in by the compressor (12) via a second air feed (22),
- in that a charge-air valve device (24) is arranged in the first air feed (20) and an ambient-air valve device (26) is arranged in the second air feed (22),
- in that a pressure sensor (28) is arranged in the first air feed (20), which pressure sensor (28) determines a boost pressure, provided by the turbocharger (16), upstream of the charge-air valve device (24),
- in that the charge-air valve device (24) is designed to allow precompressed air provided by the turbocharger (16) to be sucked in by the compressor (12) via the first air feed (20) only when the boost pressure provided by the turbocharger (16) lies below an adjustable boost-pressure threshold (40), and
- in that the ambient-air valve device (26) is designed to allow non-precompressed ambient air to be sucked in by the compressor (12) via the second air feed (22) only when the boost pressure provided by the turbocharger (16) lies above an adjustable boost-pressure threshold (40).

2. Compressor system (10) according to Claim 1, **characterized in that** the compressor (12) comprises a spill chamber (32) connectable via a valve device (30).

3. Compressor system (10) according to Claim 1 or 2, **characterized in that** the compressor system (10) comprises an electronic control apparatus (34) for the control of functions of the compressor system (10).

4. Compressor system (10) according to Claim 3, **characterized**
- in that the electronic control apparatus (34) comprises a connection (36) to a CAN bus (38), and
- in that the electronic control apparatus (34) receives via the CAN bus (38) the value of the current boost pressure provided by the turbocharger (16) or raw data for calculating the current boost pressure.

5. Method for controlling a compressor system (10) with a compressor (12) for the supply of compressed air to a commercial vehicle (14) having an engine (18) possessing a turbocharger (16), **characterized**
- in that precompressed air provided by the turbocharger (16) is sucked in by the compressor (12) via a first air feed (20), in which there are arranged a charge-air valve device (24) and a pressure sensor (28) which determines a boost pressure, provided by the turbocharger (16), upstream of the charge-air valve device (24), only when the boost pressure provided by the turbocharger (16) lies below an adjustable boost-pressure threshold (40), and
- in that non-precompressed ambient air is sucked in by the compressor (12) via a second air feed (22), in which an ambient-air valve device (26) is arranged, only when the boost pressure provided by the turbocharger (16) lies above an adjustable boost-pressure threshold (40).

6. Method according to Claim 5, **characterized in that**, below the adjustable boost-pressure threshold (40), an ambient-air valve device (26) closes the second air feed (22).

7. Method according to Claim 5 or 6, **characterized in that**, above the adjustable boost-pressure threshold (40), a charge-air valve device (24) closes the first air feed (20).

8. Method according to one of Claims 5 to 7, **characterized in that**, above an adjustable spill-chamber boost-pressure threshold (42), a valve device (30) connects a spill chamber (32).

9. Method according to one of Claims 5 to 9, **characterized in that** the boost pressure is determined from CAN bus data and/or is transmitted via a CAN bus (38).

10. Method according to one of Claims 5 to 9, **characterized in that** the first air feed (20) is closed by the charge-air valve device (24) and the second air feed (22) is closed by the ambient-air valve device (26) in order to put the compressor (12) into an energy-saving operating state.

11. Method according to Claim 10, **characterized in that** the charge-air valve device (24) and/or the ambient-air valve device (26) limit/limits an intake underpressure of the compressor (12) by means of a residual leak.

## Revendications

1. Système (10) de compresseur, comprenant un compresseur (12) d'alimentation en air comprimé d'un véhicule (14) utilitaire, ayant un moteur (18) de traction comportant un turbocompresseur (16), dans lequel de l'air précomprimé peut être aspiré par le compresseur (12) par l'intermédiaire d'un premier conduit (20) d'apport d'air, caractérisé
- en ce que de l'air ambiant non précomprimé peut être aspiré par le compresseur (12) par un deuxième conduit (22) d'apport d'air,
- en ce qu'un dispositif (24) de vanne d'air de suralimentation est monté dans le premier conduit (20) d'apport d'air et un dispositif (26) de vanne d'air ambiant est monté dans le deuxième conduit (22) d'apport d'air,
- en ce qu'il est monté, dans le premier conduit (20) d'apport d'air, un capteur (28) de pression, qui détermine, en amont du dispositif (24) de vanne d'air de suralimentation, une pression de suralimentation mise à disposition par le turbocompresseur (16),
- en ce que le dispositif (24) de vanne d'air de suralimentation est conçu pour ne permettre l'aspiration d'air précomprimé, mis à disposition par le turbocompresseur (16) par l'intermédiaire du premier conduit (20) d'apport d'air, dans le compresseur (12), que si la pression de suralimentation mise à disposition par le turbocompresseur (16) est inférieure à un seuil (40) de pression de suralimentation réglable et
- en ce que le dispositif (26) de vanne d'air ambiant est conçu pour ne permettre l'aspiration d'air ambiant, non précomprimé par l'intermédiaire du deuxième conduit (22) d'apport d'air, dans le compresseur (12), que si la pression de suralimentation mise à disposition par le turbocompresseur (16) est supérieure à un seuil (40) de pression de suralimentation réglable.

2. Système (10) de compresseur suivant la revendication 1, **caractérisé en ce que** le compresseur (12) comprend un espace (32) mort pouvant être branché par un dispositif (30) de vanne.

3. Système (10) de compresseur suivant la revendication 1 ou 2, **caractérisé en ce que** le système (10) de compresseur comprend un appareil (34) électronique de commande pour commander des fonctions du système (10) de compresseur.

4. Système (10) de compresseur suivant la revendication 3, caractérisé
- en ce que l'appareil (34) électronique de commande comprend une borne (36) sur un bus (38) CAN et
- en ce que l'appareil (34) électronique de commande reçoit, par l'intermédiaire du bus (38) CAN, la valeur de la pression de suralimentation présente mise à disposition par le turbocompresseur (16) ou des données brutes pour le calcul de la pression de suralimentation présente.

5. Procédé de commande d'un système (10) de compresseur, comprenant un compresseur (12) pour l'alimentation en air comprimé d'un véhicule (40) utilitaire ayant un moteur (18) de traction comportant un turbocompresseur (16), caractérisé
- en ce qu'il n'est aspiré, par le compresseur (12), de l'air précomprimé mis à disposition par le turbocompresseur (16) par l'intermédiaire d'un premier conduit (20) d'apport d'air, dans lequel sont montés un dispositif (24) de vanne d'air de suralimentation et un capteur (28) de pression, qui détermine en amont du dispositif (24) de vanne d'air de suralimentation la pression de suralimentation mise à disposition par le turbocompresseur (16), que si la pression de suralimentation mise à disposition par le turbocompresseur (16) est en dessous d'un seuil (40) de pression de suralimentation réglable et
- en ce que de l'air ambiant non précomprimé n'est aspiré, par l'intermédiaire d'un deuxième conduit (22) d'air, dans lequel est monté un dispositif (26) de vanne d'air ambiant par le compresseur (12), que si la pression de suralimentation mise à disposition par le turbocompresseur (16) est au-dessus d'un seuil (40) de pression de suralimentation réglable.

6. Procédé suivant la revendication 5, **caractérisé en ce que**, en dessous du seuil (40) de la pression de suralimentation réglable, le dispositif (26) de vanne d'air ambiant ferme le deuxième conduit (22) d'apport d'air.

7. Procédé suivant la revendication 5 ou 6, **caractérisé en ce que**, au-dessus du seuil (40) de la pression de suralimentation réglable, le dispositif (24) de vanne d'air de suralimentation ferme le premier conduit (40) d'apport d'air.

8. Procédé suivant l'une des revendications 5 à 7, **caractérisé en ce que**, au-dessus d'un seuil (42) de pression de suralimentation d'espace mort réglable, un dispositif (30) de vanne branche un espace (32) mort.

9. Procédé suivant l'une des revendications 5 à 8, **caractérisé en ce que** la pression de suralimentation est déterminée à partir de données du bus CAN et/ou est émise par l'intermédiaire d'un bus (38) CAN.

10. Procédé suivant l'une des revendications 5 à 9, **caractérisé en ce que** le premier conduit (20) d'apport d'air est fermé par le dispositif (24) de vanne d'air de suralimentation et le deuxième conduit (22) d'apport d'air est fermé par le dispositif (26) de vanne d'air ambiant, pour mettre le compresseur (12) dans un état de fonctionnement économisant de l'énergie.

11. Procédé suivant la revendication 10, **caractérisé en ce que** le dispositif (24) de vanne d'air de suralimentation et/ou le dispositif (26) de vanne d'air ambiant limite, par un défaut d'étanchéité résiduelle, une dépression d'aspiration du compresseur (12).
